# EUROPEAN PATENT APPLICATION

(11) **EP 2 564 965 A1**
(43) Date of publication of application: **06.03.2013**
(21) Application number: 11179446.7
(22) Date of filing: 31.08.2011
(51) Int. Cl.: B23D 57/00

(54) **Hand-held power wire saw and wire holder**

(71) Applicant: NV Bekaert SA, 8550 Zwevegem (BE)
(72) Inventor: De Bosscher, Wilmert, 9030 Drongen (BE)
(74) Representative: Hertoghe, Kris Angèle Louisa

(57) **Abstract**

The invention relates to a hand-held power wire saw (1) for cutting an object (6) and to a removable sawing wire holder (10). The wire holder comprises a sawing wire (12) and at least one spool (11) for winding the wire (12). The wire saw (1) comprises a housing (2), a rotary motor (3) for driving the wire, an object holder (5) attached to the housing for contacting the object (6) to be cut, and a tension element (7) for tensioning the wire (12) and pulling the wire (12) from an initial position looped around the object in a direction toward the housing. The wire saw (1) comprises a guide (4) for operably mechanically connecting the removable sawing wire holder (10) to the wire saw (1).

## Description

### Field of the invention

The present invention relates to the field of hand-held cutting and sawing tools. More specifically it relates to a hand-held power wire saw and a removable sawing wire holder therefor.

### Background of the invention

Wire saws are generally used in industrial applications for precision cutting. Compared to other common saw types, wire saws offer the advantage of an orientation independent edge, e.g. an equal edge width in all directions orthogonal to the longitudinal axis of the wire. Wires such as single filament steel wire with embedded or coated abrasive particles may furthermore provide good tensile strength for small diameters, e.g. less than 500 µm, e.g. 100 µm. Sawing wires can therefore be used to create clean and smooth edges, i.e. with reduced chipping or tearing, for example compared to sawing blades. The thin cutting edge is particularly of interest for valuable materials, where kerf loss may be an important consideration. This is for example illustrated by saws for semiconductor wafers, a specific industrial application, where single filament sawing wire with abrasive particles is commonly used to obtain thin slices that have to meet strict surface smoothness requirements.

In GB2344562A, a hand-held power cord saw is disclosed, in which an electric motor, accommodated in a housing, drives a saw wire, which is looped around a distal surface portion of an object to initiate a cut, while the object is supported by a support arm on the saw at a proximal surface portion.

### Summary of the invention

It is an object of embodiments of the present invention to provide efficient means for sawing.

The above objective is accomplished by a device according to embodiments of the present invention.

In a first aspect, the present invention provides a hand-held power wire saw for cutting an object when a removable sawing wire holder is operably mechanically connected thereto. This removable sawing wire holder comprises a sawing wire and at least one spool for winding the sawing wire thereon. The hand-held power wire saw comprises a housing and at least one rotary motor for driving the sawing wire. The hand-held power wire saw furthermore comprises at least one object holder attached to the housing for contacting an object to be cut and a tension element adapted for, in operation, tensioning the sawing wire and pulling the sawing wire from an initial position looped around the object in a direction toward the housing. The hand-held power wire saw furthermore comprises a guide for operably mechanically connecting a removable sawing wire holder (10) to the hand-held power wire saw.

A hand-held power wire saw according to embodiments of the present invention, may furthermore comprise a removable sawing wire holder operably mechanically connected to the guide, in which the removable sawing wire holder comprises the sawing wire and at least one spool for winding the sawing wire thereon.

In a hand-held power wire saw according to embodiments of the present invention, the at least one rotary motor may be adapted for driving the at least one spool.

In a hand-held power wire saw according to embodiments of the present invention, the tension element may uniquely define the tension being applied on the sawing wire.

In a hand-held power wire saw according to embodiments of the present invention, the tension element may comprise a movable frame slidably attached to the housing so as to enable a translational movement away from the object holder in order to tension the sawing wire.

In a hand-held power wire saw according to embodiments of the present invention, the at least one rotary motor may be attached to the movable frame.

In a hand-held power wire saw according embodiments of to the present invention, the movable frame may be operably connected to an actuator in order to enable driving of the translational movement of the movable frame by the actuator.

In a hand-held power wire saw according to embodiments of the present invention, the actuator may be the rotary motor

In a hand-held power wire saw according to embodiments of the present invention, the guide may comprise at least two axles adapted for operably mechanically connecting to at least two spools in the removable sawing wire holder.

In a hand-held power wire saw according to embodiments of the present invention, the at least one rotary motor may be adapted for driving at least one of the axles.

In a hand-held power wire saw according to embodiments of the present invention, the at least one rotary motor may comprise two rotary motors, in which each rotary motor drives a corresponding one of the at least two axles.

In a second aspect, the present invention provides a sawing wire holder comprising a sawing wire and at least one spool for winding the sawing wire thereon. The sawing wire holder comprises at least one element adapted in location and shape so as to be operably mechanically connectable to a hand-held power wire saw according to embodiments of the first aspect of the present invention.

In a sawing wire holder according to embodiments of the present invention, the sawing wire may be an endless metal wire. In an alternative sawing wire holder according to embodiments of the present invention, the sawing wire may be a fixed length metal wire.

In this latter case, the at least one spool may comprise two spools, each of the two spools having a corresponding end of the fixed length metal wire attached thereto.

In a sawing wire holder according to embodiments of the present invention, the at least one spool may comprise two spools, at least one of the two spools comprising a locking mechanism for removably and repeatably attaching a corresponding end of the fixed length metal wire thereto.

In a sawing wire holder according to embodiments of the present invention, the sawing wire may be a single filament wire having a steel core, the single filament wire comprising abrasive particles fixed thereon or embedded therein.

It is an advantage of embodiments of the present invention that a hand-held power wire saw is provided that is small and light-weight, e.g. can be easily lifted, carried, held and operated by one hand.

It is an advantage of embodiments of the present invention that a removable sawing wire holder for a hand-held power wire saw is provided that can be easily and quickly replaced.

It is an advantage of embodiments of the present invention that a hand-held power wire saw is provided which allows performing a sawing action that can be performed without the need of physical manpower to move the sawing wire axial nor orthogonal through the object to be cut.

It is an advantage of embodiments of the present invention that a removable sawing wire replacement holder for a hand-held power wire saw is provided that can be safely installed in such saw, e.g. with limited direct manual handling or without direct manual handling of said sawing wire.

It is an advantage of embodiments of the present invention that the sawing wire can be initially mounted around, in or through the object to be cut along a complex path.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 shows a schematic side view of a first exemplary embodiment of a kit of parts comprising a hand-held power wire saw (FIG. 1(b)) and a replaceable sawing wire holder (FIG. 1(a)) according to embodiments of the present invention.
FIG. 2 shows a schematic top view of the first exemplary embodiment of the kit of parts comprising a hand-held power wire saw (FIG. 2(b)) and a replaceable sawing wire holder (FIG. 2(a)) according to embodiments of the present invention.
FIG. 3 shows the kit of parts according to the first exemplary embodiment in assembled state positioned to initiate a cut through an object.
FIG. 4 shows the kit of parts according to the first exemplary embodiment in assembled state in an intermediate position while performing a cut through an object.
FIG. 5 shows a schematic side view of a second exemplary embodiment of a kit of parts comprising a hand-held power wire saw (FIG. 5(b)) and a replaceable sawing wire holder (FIG. 5(a)) according to embodiments the present invention.
FIG. 6 shows a schematic top view of the second exemplary embodiment of the kit of parts comprising a hand-held power wire saw (FIG. 6(b)) and a replaceable sawing wire holder (FIG. 6(a)) according to embodiments of the present invention.
FIG. 7 shows the kit of parts according to the second exemplary embodiment in assembled state positioned to initiate a cut through an object.
FIG. 8 shows the kit of parts according to the second exemplary embodiment in assembled state in an intermediate position while performing a cut through an object.

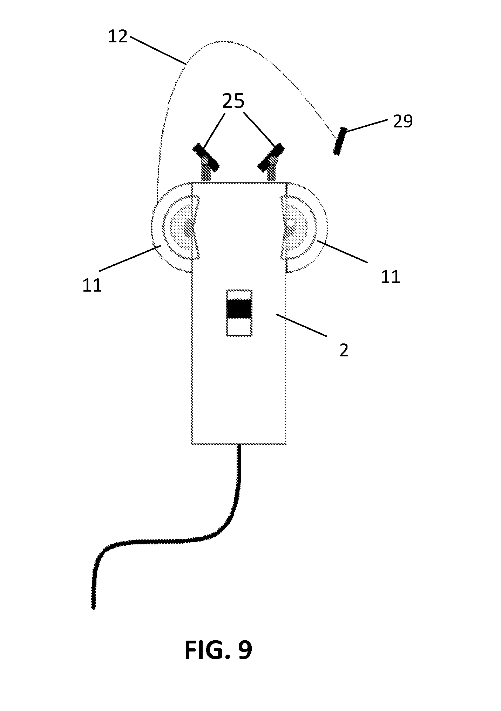

FIG. 9 illustrates an assembled wire saw according to embodiments of the present invention.
FIG. 10 shows a spool having three flanges, so as to enable an ended wire of fixed length to be wound respectively by each end onto a distinct portion of the spool.
FIG. 11 shows an indented spool adapted for receiving a connecting element on a sawing wire. The spool comprises a clamp for securing the sawing wire in the indent.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second and the like, in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and in the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to hand-held power saws, reference is made to saws driven by an actuator, e.g. an electric motor which can for example be driven by the power grid or by batteries, which saws can be easily lifted, carried, held and operated by an operator. Particularly, such saws are light-weight so as not the be cumbersome, e.g. they may have a mass of less than 15 kg, and preferably less than 5 kg, e.g. 1 kg, or less than 1 kg, for example a mass of about 500 g or less. Further, such saws have a limited volume, e.g. a total volume of less than 20 dm³, and preferably less than 2 dm³, e.g. a volume of about 1 dm³ or less. It will be clear to the person skilled in the art that, depending on the targeted application domain of a particular embodiment of the present invention, the weight and size of such a saw may vary significantly.

Embodiments of the present invention relate to a hand-held power wire saw and a removable sawing wire holder therefor. Both parts form distinct aspects of the invention, but are clearly interrelated and intended for usage in combination.

In a first aspect, the present invention relates to a hand-held power wire saw for cutting an object, in which the hand-held power wire saw is adapted for cooperating with a removable sawing wire holder according to a second aspect of the present invention. Such a removable sawing wire holder comprises a sawing wire and at least one spool for winding said sawing wire thereon. The hand-held power wire saw comprises a housing having an object holder attached thereto, at least one rotary motor for, when both parts are assembled and in operation, driving the sawing wire, and a tension element for, when both parts are assembled and in operation, tensioning the sawing wire and pulling said sawing wire from an initial position looped around an object to be cut in a direction toward the housing. The hand-held power wire saw further comprises a guide for operably mechanically connecting the removable sawing wire holder to the hand-held power wire saw. The guide is a device or a device part, with any suitable form or shape, for steadying and/or directing the motion of the sawing wire holder towards and into or onto the wire saw, so as to operably connecting one to the other.

Considering the interrelated nature of the aforementioned parts, the first and second aspect of the present invention will be discussed in combination in the description here below with reference to the accompanying drawings of exemplary embodiments. These exemplary embodiments each consist of a kit of cooperating parts according to these first and second aspects. This, nevertheless, does not indicate that the invention would only consist in the combination of the parts: each part per se forms part of the present invention.

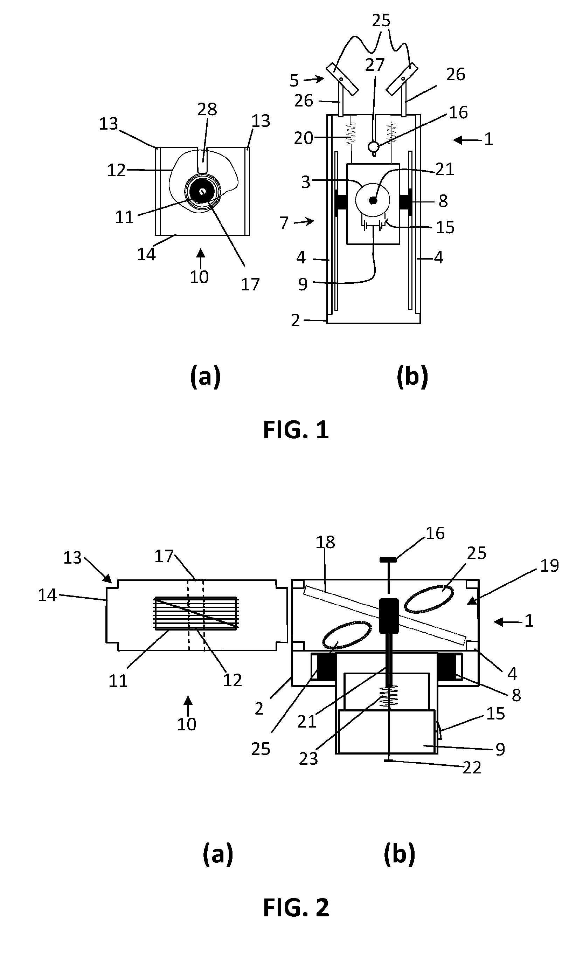

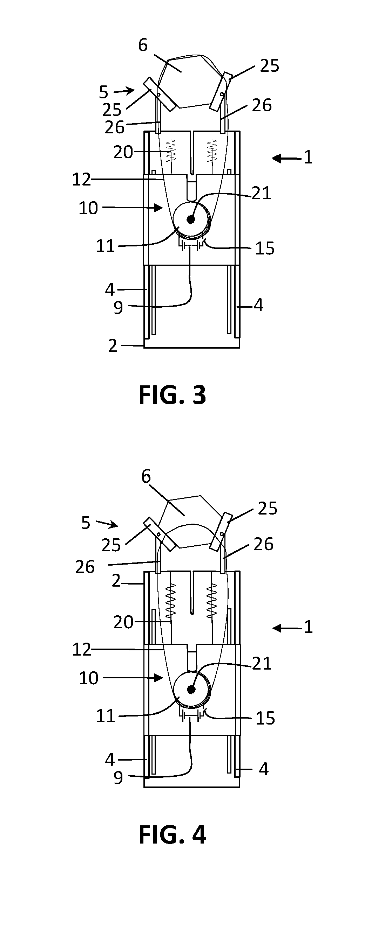

Referring to FIG. 1 to FIG. 2, a kit of parts according to a first exemplary embodiment of the present invention is shown. This kit of parts comprises a hand-held power wire saw 1 (in side view in FIG. 1(b) and in top view in FIG. 2(b)) according to the first aspect of the present invention and a sawing wire holder 10 (in side view in FIG. 1(a) and in top view in FIG. 2(a)) according to the second aspect of the present invention, designed to work together in operation. A sawing wire holder 10 according to embodiments of the present invention can be fit onto or into and removed from a power wire saw 1 according to embodiments of the present invention. Further, FIG. 3 and FIG. 4 show this kit in assembled state, i.e. with the sawing wire holder 10 operably mechanically attached to the hand-held power wire saw 1, respectively in an initial state before commencing a cut through an object 6 to be cut, and in an intermediate state during operation, i.e. while sawing through the object 6.

A cross-sectional cut through the object 6 may be obtained with an assembled kit of parts according to the first and second aspects of the present invention. The object 6 to be cut may for example be composed of plastic, wood or metal. The type of material that may be cut primarily depends on the type of sawing wire 12 used.

The first embodiment of an assembly made of the parts of a kit of parts, as illustrated in FIG. 1 to FIG. 4, may be particularly suitable for light-duty tasks and/or for cutting smaller workpieces, e.g. having a maximum diameter in the cutting plane of less than 15 cm, for example less than 10 cm, e.g. 7 cm or less. Such workpiece may for example be a rod, a tube, a profile, a pipe or a beam, e.g. such objects to be cut as may typically be encountered in small hobby projects or in home improvement tasks. Therefore, hand-held power wire saws 1 and replaceable sawing wire holders 10 according to this first embodiment may offer a cost-effective and easy to use alternative to currently available consumer hand-held power saws. However it may be suitable for professional applications as well, e.g. particularly in applications where specific quality standards apply and precision is essential, such as in medical or dental use.

The hand-held power wire saw 1 according to a first aspect of the present invention comprises a housing 2, having an object holder 5 attached thereto for contacting the object 6 to be cut. This object holder 5 may for example, as illustrated in FIG. 1 and FIG. 2, comprise pads 25 for securely pressing against a surface of the object 6 to be cut. Such pads 25 may be connected by means of suitable hinging means, for example ball hinges or shoulder hinges (not visible in the drawings), on fixed or adjustable arms 26 to the housing 2, for example to a cover 19 thereof.

The hand-held power wire saw 1 according to embodiments of the present invention is adapted for mechanical co-operation with a sawing wire holder 10 according to embodiments of the present invention. The holder 10 is thus operably mechanically connectable to the hand-held power wire saw 1. Hereto, both the hand-held power wire saw 1 and the sawing wire holder 10 may comprise co-operating parts.

Hereto, the hand-held power wire saw 1 comprises a guide 4 for operably mechanically connecting the sawing wire holder 10 to the hand-held power wire saw 1. The guide 4 may be any suitable means by which the sawing wire holder 10 may be guided towards and fit into a predetermined location and orientation onto the wire saw 1. Suitable guides may be one or more rails or rods adapted for receiving one or more corresponding indents 13 in an enclosure 14 of the removable sawing wire holder 10. Alternatively, suitable guide means may be one or more holes in the wire saw 1, e.g. in the housing 2 thereof, into which a mating part of the wire holder 10 fits. It is an advantage of such guides that no further tools are necessary for putting the wire holder 10 in place. The wire saw 1 may furthermore comprise fastening means for removably securing and/or attaching the wire holder 10 onto the wire saw 1. Suitable fastening means may be a clamping or clicking system.

In particular embodiments, the hand-held power wire saw 1 may for example comprise a cover 19 which may be removed or opened to allow insertion of the removable sawing wire holder 10. Such a cover 19 may furthermore have an opening 18, e.g. a slit, provided therein to enable the sawing wire 12 to extend out of the housing 2 while preparing and executing a sawing operation.

The holder 10 according this first exemplary embodiment may comprise a sawing wire 12 of predetermined length. The length of the sawing wire 12 may depend on the type of intended applications. In embodiments of the present invention, the sawing wire 1 will be looped around the object 6 to be cut; hence the length of the sawing wire 1 determines the dimensions (diameter) of the objects 6 which can be cut. In particular embodiments, the length of the sawing wire 12 may for example be 40 cm or less, e.g. 30 cm or less, such as 20 cm, e.g. about 15 cm. However, in particular embodiments the length of the sawing wire 12 may for example be 1m or more, and may have multiple windings on the spool 11.

In this first embodiment the sawing wire 12 may be an endless wire, i.e. the wire 12 may form a closed loop, and may be partially wound on a spool 11 while providing sufficient slack for looping this sawing wire 12 around the object 6 to be cut. The fact that the sawing wire 12 is an endless wire has the advantage that the sawing wire 12 may have a uniform diameter, and requires no attachment points to connect ends of an open ended wire, either to form a closed loop from such open-ended wire or to securely fix the wire 12 to the spool 11. Such attachment points might be more susceptible to damage, e.g. might detach during operation of the saw 1.

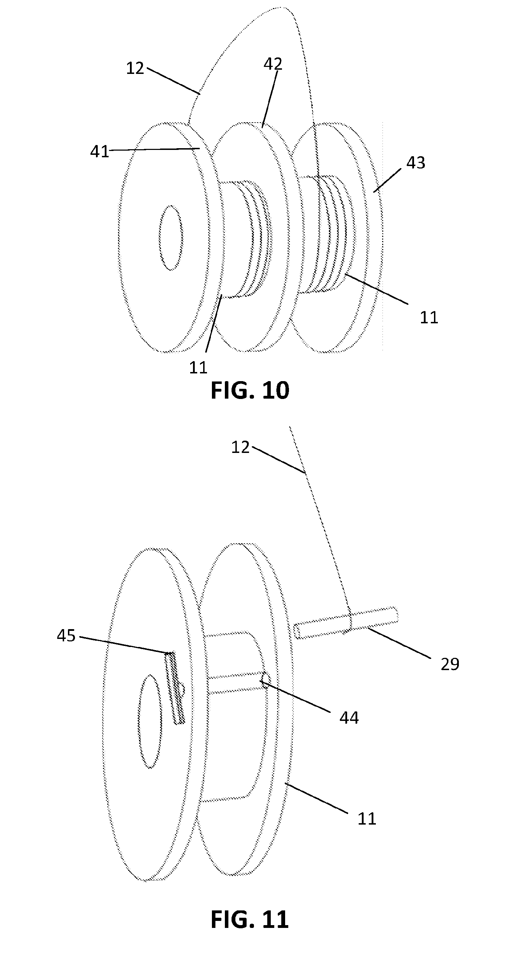

Alternatively, the sawing wire 12 may be an ended wire of fixed length, in which one end of the wire 12 may be affixed to a first portion of the spool 11, while the other end of the wire 12 may be affixed to a second portion of the spool . For example, referring to FIG. 10, the spool 11 may comprise a single axle and may have multiple flanges, for example three flanges 41, 42, 43 dividing the spool into two portions, such that the wire 12 may be wound by the first end around a first portion of the spool 11, e.g. a first portion between a first end flange 41 and a central flange 42, while the wire 12 may also be wound by the second end around the second portion of the spool 11, e.g. a second portion between the central flange 42 and a second end flange 43.

The sawing wire 12 may for example be a single filament metallic wire or a twisted wire consisting of a plurality of such metallic wires. For example, the sawing wire may be a metallic wire, e.g. a steel wire, or a wire having a metallic core, e.g. having a high carbon steel, high strength, pearlitic core. Such core may for example have a low carbon ferritic steel skin. A sawing wire 12 having a metallic core may be sheathed with an organic binder layer. This wire 12 may have abrasive particles fixed thereto, e.g. diamond particles. The abrasive particles may be entirely or partially embedded in a skin layer, e.g. in a softer low carbon ferritic steel skin, and/or in a binder layer, e.g. an organic binder sheath layer. Suitable sawing wires may for example be sawing wires such as disclosed in WO 2010/125085, WO 2010/092151 and/or WO 2010/125083. Such sawing wire may have a diameter of less than 500 µm, e.g. 400 µm of less, such as a diameter of 200 µm or less, for example a diameter of about 100 µm. In view of the limited diameter of the sawing wire 12, a precise cut may be realizable with neglectable kerf loss. The hand-held power wire saw 1 according to embodiments of the present invention comprises a rotary motor 3 for driving the sawing wire 12 into rotating or reciprocating motion, for example an electric rotary motor 3, such as for example a stepper motor. Such rotary motor 3 may be powered by a power supply, for example a battery 9, e.g. a rechargeable battery, such as shown in the first embodiment in FIG. 1 and FIG. 2. The battery 9 may be removable, e.g. may be inserted in and removed from a battery compartment (not explicitly shown) to allow replacement or recharging in an external battery charger (not shown). Alternatively, the rotary motor 3 may be powered by means of an external power supply, e.g. a power cord connectable to an electric distribution grid, or an electrical cable connected or connectable to an external transformer which is connectable to an electric distribution grid. Furthermore, the hand-held power wire saw 1 may comprise additional electrical components, e.g. internal components for transforming a power supply. The hand-held power wire saw 1 may furthermore comprise a control switch 15 for controlling the rotary motor 3, e.g. for switching the rotary motor 3 on and off, and/or for controlling the rotational speed of the rotary motor 3. Such switch 15 may furthermore be adapted for automatically powering down the rotary motor 3 when a cut through the object 6 has successfully terminated, e.g. when a sensor output of the rotary motor 3 detects a rapid decrease in motor load or a drop in motor load below a predetermined threshold. Such automatic power-down function may be advantageous from an operator safety point of view. Furthermore, an automatic power-down or reversal in direction of the rotary motor 3 when the motor load exceeds a second predetermined threshold may be advantageous to avoid damage to the sawing wire 12 and/or components of the hand-held power wire saw 1 when, for instance, the sawing wire 12 would get stuck in the object 6.

The hand-held power wire saw 1 may comprise components for mechanically coupling the rotary motor 3 to the spool 11 in the removable sawing wire holder 10. For example, as shown in FIG. 2 and FIG. 3, the output axle 21 of the rotary motor 3 may be axially displaceable, e.g. by means of a lever 22, to allow the axle 21 to be pulled out of the way while inserting the removable sawing wire holder 10, and to be subsequently inserted into a mating axial receiving opening 17 in the spool 11. The axial receiving opening 17 in the spool 11 and the output axle 21 of the rotary motor 3 may have adapted profiles, e.g. comprise corresponding protrusions and indents, or corresponding shapes, so as to allow the rotary motor 3 to efficiently drive the spool 11, and hence the sawing wire 12 wound thereon. Such lever 22 may furthermore be spring-loaded, e.g. by a coiled spring 23, to keep the axle 21 inserted in the receiving opening of the spool 11 while a removable sawing wire holder 10 is inserted into the hand-held power wire saw 1.

Alternatively, the axle 21 of the rotary motor 3 may comprise a coupling device to receive a removable spindle axis, which may be inserted, e.g. through a suitable opening in the housing 2 and through the receiving opening 17 of the spool 11, and fastened to this coupling device on the output axle 21, e.g. by screwing the removable spindle axis onto the coupling.

The hand-held power wire saw 1 furthermore comprises a tension element 7 for tensioning the sawing wire 12 while the saw 1 with inserted removable sawing wire holder 10 is in operation, thereby pulling the sawing wire 12 from an initial position looped around the object 6 to be cut, e.g. as shown in FIG. 3, in a direction toward the housing 2, e.g. over an intermediate state wherein the sawing wire 12 has partially sawed through the object 6 as shown in FIG. 4, to a final position wherein the sawing wire 12 has completely cut through the object 6, e.g. a position wherein the sawing wire 12 is retracted inside or adjacent the housing 2.

In the first embodiment shown in FIG. 1 to FIG. 4, the tension element 7 comprises a movable frame 8 slidably attached to the housing 2, so as to enable a translational movement of the wire holder 10 away from the object holder 5, in order to tension said sawing wire 12 while looped around, and while sawing through, the object 6. In particular embodiments, the moveable frame 8 may comprise a wire guide, e.g. a roller element, for tensioning the sawing wire 12 by pulling the moveable frame 8 away from the object holder 5 when the sawing wire 12 is looped around the object 6. However, in this first exemplary embodiment, the rotary motor 3 itself is attached to this movable frame 8, and the sawing wire holder 10 is, in assembled state, attached to the rotary motor 3 through the output axle 21 inserted into the receiving opening 17 of the spool 11. In this way, tensioning of the sawing wire 12 is achieved by sliding the rotary motor 3 together with the removable sawing wire holder 10 away from the object 6 fixed in position onto the object holder 5.

Operation of the hand-held power wire saw 1 according to the first embodiment of the present invention may be described with reference to FIG. 3 and FIG. 4. A sawing operation in initiated by sliding the movable frame 8 forward, i.e. toward the object holder 5. Subsequently, the sawing wire 12 is extended out of the housing 2, e.g. through the opening 18 in the cover 19. This extending of the sawing wire 12 may be assisted by grasping and pulling forward of the sawing wire 12 by means of a lever 16 extendable into the enclosure 14 through corresponding slots 27, 28 in the enclosure 14 of the removable sawing wire holder 10 and the housing 2. The object 6, e.g. a workpiece to be cut, is introduced through a loop formed by the sawing wire 12 extended out of the housing 2, and is securely placed against the object holder 5, for example by adjusting the orientation of contact pads 25 and supporting the hand-held power saw 1 on these contact pads 25 against the object 6. The sawing wire 12 is then pulled around the object 6 and positioned at the desired incision location. In this initial position, the object 6 is therefore enclosed between the object holder 5 and the sawing wire 12, as illustrated in FIG. 3.

The tension element 7 is used to pull the sawing wire 12 tight against the object 6, e.g. to keep the sawing wire 12 taut during sawing. While this may be achieved by manually sliding the moveable frame 8 in the direction away from the object 6, the moveable frame 8 may be spring-loaded, e.g. by springs 20 pushing the moveable frame 8 away from the object 6. Alternatively, the moveable frame 8 may be attached to an actuator (not illustrated) in order to enable driving of the translational movement of the movable frame 8 by said actuator. While such actuator can be an electric linear motor for actively tensioning the sawing wire 12 by sliding the moveable frame 8 away from the object 6, this actuator may also be the rotary motor 3, e.g. coupled through a differential gear and drive belt or chain.

Due to the action of the tension element 7 on the sawing wire 12, and due to the action of the sawing wire 12 on the object 6 to be cut, the sawing wire 12 cuts the object 6. Hence, in an intermediate position, as illustrated in FIG. 4, the sawing wire 12 is present partially in the object 6. The sawing action is terminated when the sawing wire has cut completely through the object 6.

It is an advantage of a wire saw according to embodiments of the present invention that it provides increased operator safety, as, once the sawing operation has started, the sawing wire 12 is barely accessible by the operator. Hence inadvertently touching the sawing wire 12 by the operator is alleviated. Furthermore, especially in case the tension element 7 is spring-loaded, the force required by an operator to cut through a workpiece is minimized: the force on the sawing wire 12 is exerted by the tension element rather than by the operator.

In addition, the force vectors may have a large normal component, relative to the surface of the object 6, over a substantial contact length, e.g. in every point where the sawing wire 12 contacts the object 6. Therefore, it is an advantage of a wire saw according to embodiments of the present invention that it may provide a large cutting force for small wire loads.

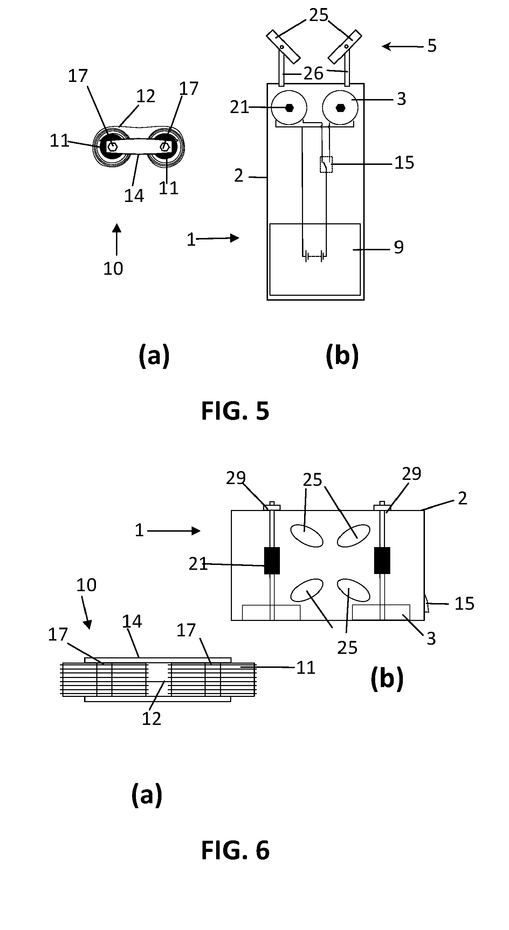

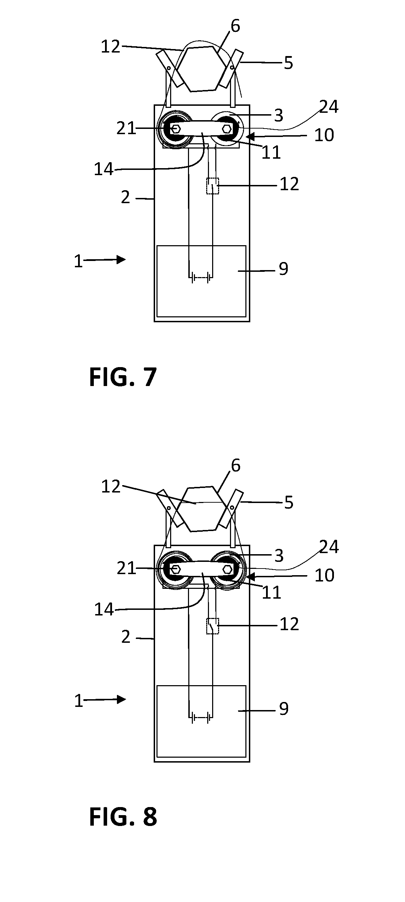

Referring to FIG. 5 and FIG. 6, a kit of parts according to a second exemplary embodiment of the present invention is shown. This kit of parts comprises a hand-held power wire saw 1 according to the first aspect of the present invention (in side view in FIG. 5(b) and in top view in FIG. 6(b)) and a removable sawing wire holder 10 according to the second aspect of the present invention (in side view in FIG. 5(a) and in top view in FIG. 6(a)), designed to work together in operation. Further, FIG. 7 and FIG. 8 show this kit in assembled state, respectively in an initial state before commencing a cut through an object 6, and in an intermediate state during operation, i.e. while sawing through the object 6.

The second embodiment shown in FIG. 5 to FIG. 8 may be particularly suitable for heavy-duty tasks and/or for cutting larger objects, e.g. objects having a maximum diameter in the cutting plane of less than 40 cm, for example less than 30 cm, or less than 20 cm, for example 15 cm of less. Furthermore, the wire saw according to the second embodiment may be used for cutting workpieces of which the extremities cannot be reached, i.e. where no loop of sawing wire 12 can be slid over one end of the workpiece 6 as is the case in accordance with the first embodiment. For example, this second embodiment may be suitable for efficiently and cleanly sawing pipes, e.g. for professional plumbing applications, even when such pipes are installed. Furthermore, this second embodiment may be suitable for sawing large blocks, trees or logs. Therefore, hand-held power wire saws and replaceable sawing wire holders according to this second embodiment may offer an efficient and easy to use alternative to currently available professional hand-held power saws. In addition, the wire saw according to the second embodiment may be used for cutting segments out of work pieces of which the extremities are very hard to reach; i.e. small holes can be drilled into the work piece through which the sawing wire 12 initially can be lead before the cutting process is started. For example, this second embodiment may be suitable for cutting a hole in a wooden panel, for example for excising a rectangular window, by using small drill holes at the extremities of the cutting zone.

In this second exemplary embodiment, the holder 10 comprises at least two spools 11, for example two spools 11, having the sawing wire 12 wound thereon. The sawing wire 12 is an ended wire, of which both extremities may be accessible, one at a time. In particular embodiments, the extremities can be fixedly connected to the spools 11 so that the sawing wire 12 permanently forms a kind of loop. Referring to FIG. 11, in alternative embodiments, the extremities may be provided with a connecting element 29 such as a hook, a bracket, a cross arm or any other suitable element. The spools 11 may be provided with corresponding holes for receiving the connecting elements 29, so as to releasably attach the sawing wire 12 to the spools 11. For example, the spool 11 may be provided with a locking mechanism 24, e.g. an indent 44 or a bracket adapted for receiving the sawing wire 12 and a clamp 45 or a screw, e.g. a spring-loaded clamp 45, for securing the sawing wire 12 in the indent or bracket, so that the sawing wire may be detached from the spool 11 in order to loop the sawing wire 12 around an object 6 to be cut.

This holder 10 according to embodiments of the present invention is operably mechanically connectable to the hand-held power wire saw 1, i.e. the hand-held power wire saw 1 comprises a guide for operably mechanically connecting the sawing wire holder 10 to the hand-held power wire saw 1, for example axles 21 for receiving corresponding axial receiving openings 17 in the spools 11 of the holder 10. These axles 21 furthermore serve the purpose of mechanically coupling at least one rotary motor 3 to the spools 11 in the removable sawing wire holder 10. The axial receiving opening 17 in the spool 11 and the output axle 21 of the rotary motor 3 may have adapted profiles, e.g. comprise corresponding protrusions and indents or mating shapes, to allow the rotary motor 3 to efficiently drive the spool 11, and hence the sawing wire 12 wound thereon. The axles 21 may be provided with means for securely fastening the spools 11, e.g. the axles 21 may have a threaded free end whereon a washer and nut 29 may be screwed in order to hold the spools 11 on the axles 21.

In the second embodiment, the hand-held power wire saw 1 according to a first aspect of the present invention comprises a rotary motor 3 for driving the sawing wire 12, for example an electric rotary motor 3 for driving at least one of the at least two axles 21. In particular embodiments, the hand-held power wire saw 1 may comprise at least two rotary motors 3, each rotary motor 3 driving one of the axles 21. Alternatively, the axles 21 may be driven by only one rotary motor 3, having a transmission provided thereon to enable switching of the output torque of rotary motor 3 between both axles 21.

In operation, one of the axles 21 is being driven while a mild braking force is being exerted on the other axle 21. This results in a winding of the sawing wire 12 on the spool 11 that is being driven while the sawing wire 12 on the non-driven spool 11 unwinds. The braking action on the non-driven axle 21 ensures that the sawing wire 12 is maintained tight against the object 6 to be cut, so as to enable sawing by friction forces exerted by the sawing wire 12 on the object 6, e.g. by abrasive action of particles fixed on the sawing wire 12. Thus, the hand-held power wire saw 1 comprises a tension element 7, namely the braking means on the axles 21, for tensioning the sawing wire 12 while the saw 1 with inserted removable sawing wire holder 10 is in operation, thereby pulling the sawing wire 12 from an initial position looped around the object 6, e.g. as shown in FIG. 7, in a direction toward the housing, e.g. over an intermediate state wherein the sawing wire 12 has partially sawed through the object 6 as shown in FIG. 8, to a final position wherein the sawing wire 12 has completely cut through the object 6, e.g. a position wherein the sawing wire 12 is retracted inside the housing 2. In addition, the tension element 7 uniquely defines the tension on the sawing wire 12 as to ensure optimal cutting performance on the object6 while keeping the tension securely below the breaking force of the sawing wire 12. The braking means may comprise friction brakes, e.g. electromechanical, piezoelectric or mechanical brakes, or may comprise eddy-current brakes. Such eddy-current braking may for example be integrated in the rotary motor 3.

The rotary motor 3 may be powered by a power supply, for example a battery 9, e.g. a rechargeable battery. Alternatively, the rotary motor 3 may be powered by means of an external power supply, e.g. a power cord connectable to an electric distribution grid. The hand-held power wire saw 1 may furthermore comprise a control switch 15 for controlling the rotary motor 3, e.g. for switching the rotary motor 3 on and off, and/or for controlling the rotational speed of the rotary motor 3. In an embodiment where both axles 21 are driven by separate rotary motors 3, the control switch 15 may be used to switch between actively driving the first rotary motor 3 while braking the second motor 3 to actively driving the second motor 3 while actively braking the first motor 3. In this configuration, both motors are arranged to allow rotation in opposite directions, so as to alternate between winding the sawing wire 12 on the first spool 11, e.g. until completely unwound from the second spool 11, and on the second spool 11, e.g. until completely unwound from the first spool 11. The control switch 15 may comprise additional components, e.g. a sensor input from the rotary motors 3, in order to sense stalling of a motor when the sawing wire 12 is completely unwound from the non-driven spool 11, and automatically switch the driving and braking of the motors 3.

Operation of the hand-held power wire saw 1 according to the second embodiment of the present invention may be described with reference to FIG. 7 and FIG. 8. A sawing operation may be initiated by winding the sawing wire 12 onto one of the spools 11, to enable access to the locking mechanism 24 on the other spool, and by thereafter deactivating driving and braking of the axles 21, and/or putting the rotary motor 3 in neutral, e.g. a free-run low-resistance mode, in order to allow the sawing wire 12 to be detached at one extremity from the corresponding spool 11 (the spool 11 onto the sawing wire 12 has not been wound), by removing the connecting element 29 from the corresponding hole. The object 6, e.g. a workpiece to be cut, may then be placed securely against the object holder 5, for example by adjusting the orientation of contact pads 25 and supporting the hand-held power saw 1 on these contact pads 25 against the object 6. Subsequently the sawing wire 12 may be extended out of the housing 2, e.g. by pulling the sawing wire 12 at the connecting element 29 at its free extremity, and looped around the object 6 at the desired incision location. The sawing wire 12 is again attached and securely fastened to the spool 11 onto which no wire 12 is wound, by attaching the free connecting element 29 at the corresponding spool 11, e.g. by attaching the free connecting element 29 into a corresponding hole in the spool 11. This way, the wire saw 1 is brought in an initial position. In this initial position, the object 6 is enclosed between the object holder 5 and the sawing wire 12. Cutting may then be executed by activating the rotary motor 3, thereby allowing the sawing wire 12 to saw through the object 6 by the combined action of driving a first spool 11 and braking a second spool 11. When the end of the sawing wire 12 is reached, action of the first and second spool 11 may be reversed to continue sawing.

The above method of operation allows looping of the sawing wire 12 around elongate objects, e.g. around large trees or pipes without accessible ends, by detaching the sawing wire 12 from at least one of the spools 11. In alternative embodiments, where the object 6 to be cut has at least one freely accessible end, the method of operation may be as explained higher, including extending the sawing wire 12, which is and remains attached to both spools 11, out of the housing for looping around the object 6.

Hereinabove, the invention has been described with reference to embodiments, each comprising different kits of parts. It is to be understood that details of the one kit of parts can also be implemented on the other kit of parts. As an example, it can be seen in particular from FIG. 6 that in the second embodiment, twice two supporting pads 25 are provided for being pressed against and for supporting a surface of the object 6 to be cut, while in the first embodiment only a single pair of supporting pads is provided, as illustrated in FIG. 2. Nevertheless, this is not intended to be limiting for the present invention: also the first embodiment could be implemented with at least twice two supporting pads 25.

## Claims

1. A hand-held power wire saw (1) for cutting an object (6) when a removable sawing wire holder (10) is operably mechanically connected thereto, in which the removable sawing wire holder (10) comprises a sawing wire (12) and at least one spool (11) for winding said sawing wire (12) thereon, the hand-held power wire saw (1) comprising
- a housing (2),
- at least one rotary motor (3) for driving the sawing wire (12),
- at least one object holder (5) attached to said housing (2) for contacting an object (6) to be cut, and
- a tension element (7) adapted for, in operation, tensioning the sawing wire (12) and pulling said sawing wire (12) from an initial position looped around the object (6) in a direction toward the housing,
**characterized in that** the hand-held power wire saw (1) furthermore comprises a guide (4) for operably mechanically connecting a removable sawing wire holder (10) to the hand-held power wire saw (1).

2. A hand-held power wire saw (1) according to claim 1, furthermore comprising a removable sawing wire holder (10) operably mechanically connected to the guide (4), in which the removable sawing wire holder (10) comprises the sawing wire (12) and at least one spool (11) for winding said sawing wire thereon.

3. A hand-held power wire saw (1) according to claim 2, wherein said at least one rotary motor (3) is adapted for driving said at least one spool (11).

4. A hand-held power wire saw (1) according to any of the previous claims, wherein said tension element (7) comprises a movable frame (8) slidably attached to said housing (2) so as to enable a translational movement away from said object holder (5) in order to tension said sawing wire (12).

5. A hand-held power wire saw (1) according to claim 4, wherein said at least one rotary motor (3) is attached to said movable frame (8).

6. A hand-held power wire saw (1) according to any of claim 4 or claim 5, wherein said movable frame (8) is operably connected to an actuator in order to enable driving of the translational movement of the movable frame (8) by said actuator.

7. A hand-held power wire saw (1) according to claim 6, wherein said actuator is the rotary motor (3).

8. A hand-held power wire saw according to any of the previous claims, wherein said guide (4) comprises at least two axles (21) adapted for operably mechanically connecting to at least two spools (11) in the removable sawing wire holder (10).

9. A hand-held power wire saw (1) according to claim 8, wherein the at least one rotary motor (3) is adapted for driving at least one of the axles (21).

10. A sawing wire holder (10) comprising a sawing wire (12) and at least one spool (11) for winding said sawing wire (12) thereon, said sawing wire holder (10) comprising at least one element adapted in location and shape so as to be operably mechanically connectable to a hand-held power wire saw (1) according to any of claims 1 to 9.

11. A sawing wire holder (10) according to claim 10, wherein said sawing wire (12) is an endless metal wire.

12. A sawing wire holder (10) according to claim 10, wherein said sawing wire (12) is an fixed length metal wire.

13. A sawing wire holder (10) according to claim 12, wherein the at least one spool (11) comprises two spools (11), each of the two spools (11) having a corresponding end of the fixed length metal wire attached thereto.

14. A sawing wire holder (10) according to claim 12, wherein the at least one spool (11) comprises two spools (11), at least one of the two spools (11) comprising a locking mechanism (24) for removably and repeatably attaching a corresponding end of the fixed length metal wire thereto.

15. A sawing wire holder (10) according to any of claims 10 to 14, in which the sawing wire (12) is a single filament wire having a steel core, the single filament wire comprising abrasive particles fixed thereon or embedded therein.
